(19) Europäisches Patentamt
European Patent Office
Office européen des brevets

(11) Veröffentlichungsnummer: **0 172 517 B1**

(12) **EUROPÄISCHE PATENTSCHRIFT**

(45) Veröffentlichungstag der Patentschrift: **22.01.92**

(51) Int. Cl.[5]: **C08G 63/18**, C08G 63/68, C08G 69/26, C08G 69/44, C08J 5/18

(21) Anmeldenummer: **85110091.7**

(22) Anmeldetag: **12.08.85**

Die Akte enthält technische Angaben, die nach dem Eingang der Anmeldung eingereicht wurden und die nicht in dieser Patentschrift enthalten sind.

# (54) Mesogene Gruppen enthaltende Polymere und deren Verwendung.

(30) Priorität: **24.08.84 DE 3431133**

(43) Veröffentlichungstag der Anmeldung: **26.02.86 Patentblatt 86/09**

(45) Bekanntmachung des Hinweises auf die Patenterteilung: **22.01.92 Patentblatt 92/04**

(84) Benannte Vertragsstaaten: **BE DE FR GB IT NL**

(56) Entgegenhaltungen:
**US-A- 3 365 425**
**US-A- 3 415 780**
**US-A- 3 697 478**
**US-A- 3 801 528**
**US-A- 3 962 314**

**MATROMOL. CHEM., RAPID. COMMUN., Band 6, Nr. 4, 1985, Seiten 291-299, Basel, CH; B. RECK et al.: "Combined liquid crystalline polymers: Mesogens in the main chain and as side groups"**

(73) Patentinhaber: **BASF Aktiengesellschaft**
**Carl-Bosch-Strasse 38**
**W-6700 Ludwigshafen(DE)**

(72) Erfinder: **Hisgen, Bernd, Dr.**
**Fichtestrasse 17**
**W-6703 Limburgerhof(DE)**
Erfinder: **Neumann, Peter, Dr.**
**Franz-Schubert-Strasse 1**
**W-6908 Wiesloch(DE)**
Erfinder: **Sterzel, Hans-Josef, Dr.**
**Wasgauring 3**
**W-6701 Dannstadt-Schauernheim(DE)**
Erfinder: **Ringsdorf, Helmut, Prof. Dr.**
**Kehlweg 41**
**W-6500 Mainz-Gonsenheim(DE)**
Erfinder: **Reck, Bernd**
**Rheinstrasse 3**
**W-6501 Mommenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 172 517 B1

PATENT ABSTRACTS OF JAPAN, Band 6, Nr. 114 (C-110)[992], 25. Juni 1982; & JP - A - 57 42729 (MOTOO TAKAYANAGI) 10.03.1982

MAKROMOLEKULARE CHEMIE, Ergänzungsnr. 6, März 1984, Seiten 3-27, Heidelberg; N.A. PLATE et al.: "Thermotropic liquid crystalline polymers - Problems and trends"

THE BRITISH POLYMER JOURNAL, Dezember 1980, Seiten 132-146; J.-I. JIN et al.: "Thermotropic liquid crystalline polyesters with rigid or flexible spacer groups"

## Beschreibung

Die Erfindung betrifft mesogene Gruppen enthaltende Polymere die flüssigkristalline Phasen bilden.

Aus der EP-B-7574 sind Polymere bekannt, bei denen die starren, formanisotropen, zu flüssigkristallinen Phasen führenden mesogenen Molekülabschnitte als Seitengruppen über flexible Seitenketten an die Polymerkette gebunden sind. Letztere gestatten eine schnelle Orientierung und Phasenumwandlung bei Temperaturen im Bereich von -50 bis 200° C, ermöglicht durch entsprechend niedrige Glastemperaturen des Polymeren.

Ferner sind Polymere, bei denen die starren formanisotropen, zu flüssigkristallinen Phasen führenden mesogenen Molekülabschnitte in der Hauptkette angeordnet sind, z.B. aus British Polymer Journal, Band 12, Seiten 132ff (1980) oder der US-PS 4 118 372 bekannt. Ferner können die zu flüssigkristallinen Phasen führenden mesogenen Molekülabschnitte sowohl über flexible aliphatische Ketten als auch durch nicht-mesogene aromatische Strukturelemente wie unsymetrisch substituierte Phenyl-, Naphthalin- oder sonstige Ringsysteme miteinander verbunden sein. Letztere flüssigkristallinen Polymere ergeben Werkstoffe, die in Richtung der Polymerkette eine große Steifigkeit und Reißfestigkeit aufweisen. Die starke Anisotropie der Eigenschaften dieser Polymeren bedingt jedoch den Nachteil, daß die mechanischen Eigenschaften senkrecht zur Orientierungsrichtung extrem abfallen.

Es war deshalb die technische Aufgabe gestellt, flüssigkristalline Polymere zur Verfügung zu stellen, die auch senkrecht zur Orientierungsrichtung gute mechanische Eigenschaften aufweisen.

Diese technische Aufgabe wird gelöst durch mesogene Gruppen enthaltende flüssigkristalline Polymere, dadurch gekennzeichnet, daß sie aufgebaut sind aus mesogene Gruppen enthaltenden Polyestern, Polyamiden oder Polyesteramiden an die Seitenketten gebunden sind, die jeweils eine mesogene Gruppe enthalten.

Die neuen Polymeren haben den Vorteil, daß sie auch senkrecht zur Orientierungsrichtung gute mechanische Eigenschaften bzw. Eigenschaftskombinationen aufweisen die den bekannten flüssigkristallinen Polymeren abgehen. Die neuen Polymeren zeigen deutlich verbesserte mechanische Eigenschaften in der von der Polymerhauptkette abweichenden Richtung. Außerdem bilden die neuen Polymeren im Vergleich zu flüssigkristallinen Polymeren der herkömmlichen Art breitere Temperaturbereiche aus, in denen flüssigkristalline Phasen existieren. Daraus ergibt sich unter anderem der Vorteil eines größeren Temperaturbereichs für die Verarbeitung solcher Polymeren. Durch Verstrecken der neuen Polymeren als Filme, Folien oder Fasern ist eine biaxiale Orientierung der mesogenen Gruppen erreichbar, verbunden mit einer erhöhten mechanischen Festigkeit in zwei Richtungen. Durch eine nachträgliche Vernetzung kann eine weitere Erhöhung der mechanischen Eigenschaften erreicht werden. Die neuen Polymeren sind insofern bemerkenswert, als nicht zu erwarten war, daß sich trotz der sperrigen Seitenketten flüssigkristalline Phasen ausbilden.

Die erfindungsgemäßen flüssigkristalline sind aufgebaut aus Polymerketten, die mesogene Gruppen enthalten. Die Polymerketten sind Polyester-, Polyamid- oder Polyesteramid- Ketten, insbesondere Polyester-Ketten. An die Polymerkette sind Seitenketten gebunden, wobei jede Seitenkette eine mesogene Gruppe enthält. Die Seitenketten können über die Polymerkette statistisch, sequenziert oder alternierend verteilt sein. Das Verhältnis von mesogenen Gruppen in der Polymerkette zu mesogenen Gruppen in der Seitenkette beträgt in der Regel 1 bis 20:1, insbesondere 1 bis 10:1.

In der Polymerkette können die mesogenen Gruppen über funktionelle Gruppen, wie Garbonsäureester-, Carbonamid- oder Urethangruppen, ferner über aliphatische oder araliphatische Reste, die Heteroatome in der Kette enthalten vorteilhaft mit bis zu 20 Kettengliedern miteinander verbunden sein. Die mesogenen Gruppen in der Seitenkette können über eine Carbonsäureester-, Carbonamid- oder Urethangruppe, ferner über einen aliphatischen Rest, der Heteroatome in der Kette enthält vorteilhaft mit bis zu 12 Kettengliedern, an die Polymerkette gebunden sein. Die mesogenen Reste in der Seitenkette enthalten vorteilhaft zur Vernetzung befähigte Reste, wie, olefinisch ungesättigte Reste oder Nitrilgruppen.

Erfindungsgemäße Polymere sind beispielsweise wie folgt aufgebaut:

a) eine Polymerkette, in der mesogene Gruppen über einen aliphatischen oder araliphatischen Rest, der Heteroatome enthält, oder aromatische Gruppen miteinander verbunden sind. Der mesogene Rest der Seitenkette ist über einen aliphatischen Rest, der Heteroatome enthält, an die aliphatischen, araliphatischen oder aromatischen Reste der Polymerkette gebunden;

b) die Polymerkette ist wie unter a) aufgebaut. Die mesogenen Gruppen der Seitenkette sind jedoch über einen aliphatischen Rest, der Heteroatome enthält, an die mesogenen Gruppen der Polymerkette gebunden;

c) die Polymerkette ist aufgebaut wie unter a). Die mesogenen Gruppen in den Seitenketten sind jedoch direkt über eine Carbonsäureester-, Carbonamid- oder Urethangruppe an die aliphatischen bzw. araliphatischen Reste der Polymerkette gebunden;

d) die Polymerkette ist aufgebaut wie unter a). Die mesogenen Gruppen in den Seitenketten sind jedoch direkt über eine Carbonsäureester-, Carbonamid- oder Urethangruppe an die mesogenen Gruppen der Polymerkette gebunden oder

e) die mesogenen Gruppen in der Polymerkette sind über Carbonsäureester-, Carbonamid- oder Urethangruppen miteinander verbunden und die mesogene Gruppe der Seitenkette ist über einen aliphatischen Rest, der Heteroatome enthält, an die mesogenen Gruppen der Polymerkette gebunden.

Polymere, aufgebaut entsprechend a), b) und e) sind bevorzugt.

Bevorzugte mesogene Gruppen sind solche der Formeln I bis V

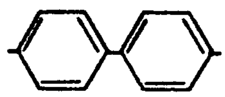
(I)

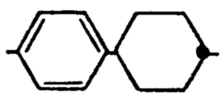
(II)

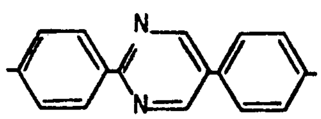
(III)

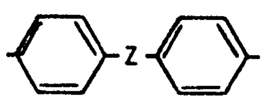
(IV)

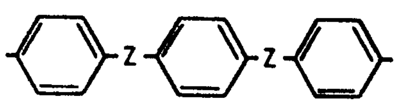
(V)

Die mesogenen Gruppen der Formeln I bis V können als Substituenten bis zu 3 Alkylreste mit 1 bis 4 Kohlenstoffatomen oder Halogenatome enthalten und/oder eine Seitenkette die eine mesogene Gruppe enthält, entsprechend den vorgenannten Polymeren b), d) und e).

In den Formeln IV und V steht Z für -N = N-,

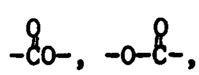

$-CH = CR_1-$, $-CR_1 = CH$, -CH = CH-COO-, OOC-CH = CH-,

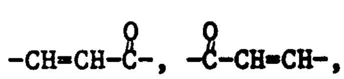

-C = C-,

$$-\overset{O}{\overset{\|}{C}}-\overset{R_1}{N}-$$

oder

$$-\overset{R_1}{N}-\overset{O}{\overset{\|}{C}}-,$$

wobei $R_1$ Wasserstoff oder einen $C_1$- bis $C_4$-Alkylrest bezeichnet.

Bevorzugt bedeutet Z -N = N-,

$$-\overset{O}{\overset{\|}{C}}-O-,\ -O-\overset{O}{\overset{\|}{C}}-,\ -CH{=}CH-\overset{O}{\overset{\|}{C}}O-,\ -\overset{O}{\overset{\|}{C}}-CH{=}CH-,\ -\overset{O}{\overset{\|}{C}}-\overset{R_1}{N}-\overset{O}{\overset{\|}{C}}-$$

wobei $R_1$ die obige Bedeutung hat.

In den Polymerketten sind die mesogenen Gruppen der Formeln I, III, IV oder V bevorzugt, während in den Seitenketten die mesogenen Gruppen der Formeln I, II oder IV bevorzugt sind.

Bevorzugte aliphatische und/oder araliphatische Gruppen mit denen in der Polymerkette die mesogenen Gruppen verbunden sind, sind solche der allgemeinen Formel VI

$$-[A-K]_m-B-\underset{R_2}{\underset{|}{V}}-C-[K-D]_n- \qquad (VI)$$

In der Formel VI sind A, B, C und D jeweils gleich oder verschieden und stehen für eine chemische Bindung oder -O-, -S-,

$$-\overset{R_3}{N}-,\ -O\overset{O}{\overset{\|}{C}}-,\ -\overset{O}{\overset{\|}{C}}O-,$$

$$-S\overset{O}{\overset{\|}{C}}-,\ -\overset{O}{\overset{\|}{C}}-S-,\ -\overset{R_3}{N}-\overset{O}{\overset{\|}{C}}-,\ -\overset{O}{\overset{\|}{C}}-\overset{R_3}{N}-,\ -O\overset{O}{\overset{\|}{C}}-\overset{R_3}{N}-,\ -\overset{R_3}{N}-\overset{O}{\overset{\|}{C}}-O-,\ -\overset{H}{N}-\overset{O}{\overset{\|}{C}}-\overset{R_3}{N}-,\ -\overset{R_3}{N}-\overset{O}{\overset{\|}{C}}-\overset{H}{N}-$$

wobei $R_3$ jeweils für ein Wasserstoffatom oder einen $C_1$- bis $C_4$-Alkylrest steht.

Besonders bevorzugt sind -O-,

$$-O\overset{O}{\overset{\|}{C}}-,\ -\overset{O}{\overset{\|}{C}}-O-,\ -\overset{R_3}{N}-\overset{O}{\overset{\|}{C}}-,\ -\overset{O}{\overset{\|}{C}}-\overset{R_3}{N}-$$

wobei $R_3$ die obige Bedeutung hat.

K steht für gerade oder verzweigte Alkylenreste mit 1 bis 12 Kohlenstoffatomen in der Kette oder für die Reste $-(CH_2)_2-O-(CH_2)_2-$, $-(CH_2)_2-S-(CH_2)_2-$ oder

$$-(CH_2)_2-\overset{CH_3}{N}-(CH_2)_2-.$$

Vorzugsweise bezeichnet K einen geradkettigen Alkylenrest mit 1 bis 6 Kohlenstoffatomen.

V bezeichnet eine

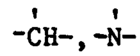

oder eine Phenylengruppe. m und n sind gleich oder verschieden und stehen für 0 oder 1.

$R_2$ steht für ein Wasserstoffatom oder eine Seitenkette mit einer mesogenen Gruppe der Formel VII

$-[A - K]_o - B - M -[E]_p$ (VII)

In der Formel VII bezeichnen M die vorgehend definierten mesogenen Gruppen.

A und B sind jeweils gleich oder verschieden und stehen wie in Formel VI für eine chemische Bindung oder -O-, -S-,

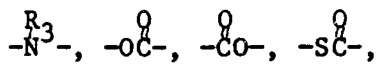

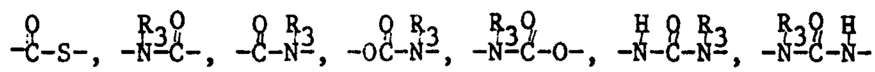

wobei $R_3$ jeweils für ein Wasserstoffatom oder einen $C_1$- bis $C_4$-Alkylrest steht.

o steht für 0 oder 1.

K steht für einen geradkettigen oder verzweigten Alkylenrest mit 1 bis 12 Kohlenstoffatomen in der Kette oder die Gruppen $-(CH_2)_2-O-(CH_2)_2$, $-(CH_2)_2-S-(CH_2)_2-$ oder

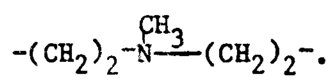

p steht für 1 oder 2.

E steht für -CN-, Halogen-, $NO_2$-, $C_1$- bis $C_{12}$-Alkyl-, $C_1$- bis $C_{12}$-Alkoxy-Gruppen oder folgende Gruppen -CH = CH-COO-$C_1$-$C_6$-Alkyl, -CH = CH-COO-Phenyl, -OOC-CH = CH-Phenyl,

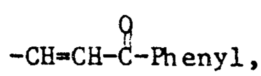

$-O(CH_2)_q-CN$, $-C{\equiv}C-R^4$,

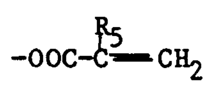

wobei q für eine ganze Zahl von 1 bis 5 steht, $R^4$ für ein Wasserstoffatom, einen geraden oder verzweigten Alkylenrest mit 1 bis 10 Kohlenstoffatomen oder für einen mit geradem oder verzweigtem Alkylenrest mit 1 bis 12 Kohlenstoffatomen substituierten Phenylenring steht, $R^5$ für ein Wasserstoffatom, Methyl- oder Ethylrest oder ein Halogenatom steht.

Bevorzugt sind folgende Gruppen -CN, $C_1$-$C_{12}$-Alkyl, $C_1$-$C_{12}$-Alkoxy, -CH = CH-COO-$C_1$-$C_6$-Alkyl, -O-$(CH_2)_q$-CN, -C = C-$R_4$ oder -OOC

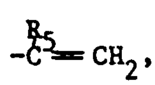

wobei q, $R_4$ und $R_5$ die obigen Bedeutungen haben.

Die Polymeren, die mesogene Gruppen in der Hauptkette und in der Seitenkette chemisch gebunden enthalten, können in an sich bekannten und in der Polymerchemie üblichen Verfahren hergestellt werden. Eine Herstellungsmethode ist beispielsweise die Polykondensation von Einheiten die zwei endständige Carboxylgruppen oder deren funktionelle Derivate im Molekül enthalten mit Einheiten die zwei endständige, mit der Carboxylgruppe oder deren funktionellen Derivaten reagierende reaktionsfähige Gruppen, wie OH-, Amino- oder Mercaptogruppen enthalten. So können beispielsweise die mesogenen Gruppen als Diole vorliegen und mit Dicarbonsäuren verknüpft werden. Die Umsetzung kann in Schmelz- oder in Lösungspolykondensation erfolgen. Die Lösungspolykondensation erfolgt z.B. durch azeotrope Veresterung, wie in Makromolekulare Chemie, Band 7, 1951, Seiten 82ff, beschrieben wird. Die Schmelzpolykondensation erfolgt in an sich bekannter Weise, gegebenenfalls unter Zugabe von Katalysatoren wie Tetraisopropylorthotitanat. Eine geeignete Arbeitsweise wird beschrieben in Polymer, Band 24, 1983, Seiten 1299ff.

Polymere, die in der Seitengruppe eine vernetzbare Gruppe an der mesogenen Gruppe enthalten, können durch geeignete Maßnahmen vernetzt werden. Die Vernetzungsreaktionen erfolgen in an sich bekannter Weise durch Erhitzen und/oder Bestrahlen, gegebenenfalls in Gegenwart von Katalysatoren oder Sensibilisatoren. Beispielsweise kann die Vernetzung in festem, flüssigkristallinem oder in isotrop-flüssigem Zustand erfolgen. Vorzugsweise wird in festem oder flüssigkristallinem Zustand vernetzt.

Die erfindungsgemäßen Polymeren, die mesogene Gruppen in der Polymerkette und in der Seitengruppe chemisch gebunden enthalten, können in verschiedener Weise angewandt werden. Die Anwendung ergibt sich aus der Kombination von flüssigkristallinen Eigenschaften und den spezifischen Eigenschaften der jeweiligen Polymeren. Im Gegensatz zu bislang bekannten flüssigkristallinen Polymeren die mesogene Gruppen entweder nur in der Polymerkette oder nur in der Seitengruppe enthalten, kann bei den erfindungsgemäßen Polymeren eine biaxiale Festigkeit durch eine Orientierung der mesogenen Gruppen in der Hauptkette und in der Seitenkette in unterschiedlichen Richtungen erreicht werden. Dadurch ergeben sich Anwendungsmöglichkeiten zur Herstellung von Folien, Fasern und Formteilen mit biaxialer Festigkeit. Durch eine nachträgliche Vernetzung in Substanz kann die biaxiale Orientierung und Festigkeit irreversibel fixiert werden. Hierdurch erhält man Folien, Fasern und Formteile mit biaxialer Festigkeit, guter Wärmeformbestindigkeit, Lösungsmittel- und Spannungsrißbeständigkeit.

Die erfindungsgemäßen Polymeren seien an folgenden Beispielen erläutert.

## Beispiel 1

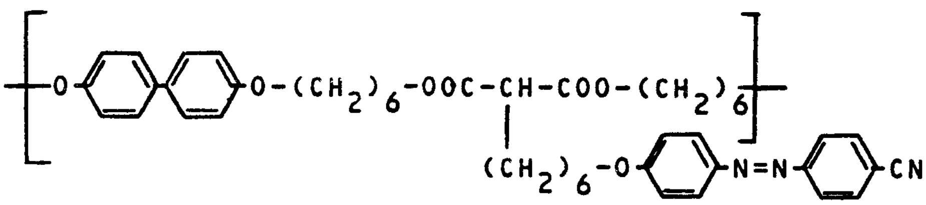

Schmelzpolykondensation:

7.00 g (18.1 mmol) 4,4'-Bis-(6-hydroxyhexyloxy)-biphenyl und 8.431 g (18.1 mmol) 6-[4-(4-Cyanophenylazophenoxy)-hexyl-1]-malonsäurediethylester werden zusammen unter Durchleitung eines trockenen $N_2$-Stroms auf 160 °C erhitzt. Zu der entstandenen Schmelze werden ca. 0.04 g Tetraisopropylorthotitanat als 20 gew.%ige Lösung in Ethylenglykoldimethylether und 2,5 Stunden ein Stickstoffstrom durch die Schmelze bei 160 °C geleitet. Unter Rühren wird die Temperatur unter vermindertem Druck (20 mbar) innerhalb 1 Stunde auf 190 °C gesteigert. Nach Zugabe weiterer 0.03 g Titanat wird die Schmelze unter Rühren im Vakuum (<10 mbar) erhitzt, wobei die Temperatur langsam innerhalb 1 Stunde auf 210 °C erhöht wird. Das Polymere wird in 1.2-Dichlorethan gelöst, filtriert und in Methanol oder Aceton gefällt. Nach einmaligem Umfällen wird das Polymere im Vakuum bei 50 °C getrocknet. Die Ausbeute an Polymer beträgt 13 g (94 % d.Th.).

| Elementaranalyse: | | | |
|---|---|---|---|
| ber.: | 72,70 C | 7,03 H | 5,53 N |
| gef.: | 72,62 C | 7,08 H | 5,54 N |

Das Polymere hat eine Glastemperatur von 62° C, eine Umwandlungstemperatur die bei 112° C den Übergang zwischen zwei verschiedenen smektischen Flüssigkristallphasen charakterisiert und eine Umwandlungstemperatur smektisch/isotrop von 184° C, die Umwandlungswärmen wurden zu 11.8 J/g (112° C) und 17.2 J/g (184° C) bestimmt.

## Vergleichsbeispiel

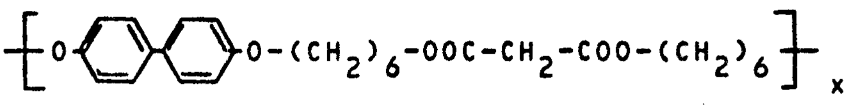

Das Polymere wurde aus 4,4'-Bis-(6-hydroxyhexyloxy)-biphenyl und Malonsäurediethylester unter vergleichbaren Bedingungen wie in Beispiel 1 hergestellt.

Das Polymere hat einen Schmelzpunkt von 126° C und eine Umwandlungstemperatur flüssigkristallin/isotrop von 147° C, die Umwandlungsenthalpie wurde zu 21,3 J/g bestimmt.

## Beispiel 2

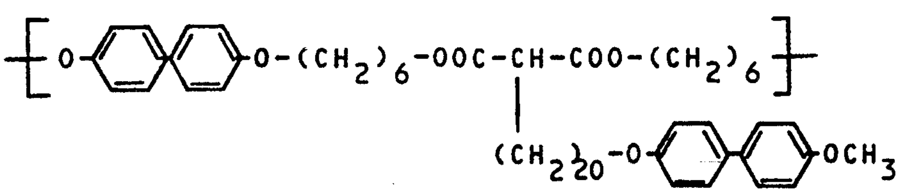

Lösungspolykondensation:

3.00 g (6,78 mmol) 10-[4-(4'-Methoxybiphenylenoxy)-1-decyl]-malonsäure, 2.62 g (6.78 mmol) 4,4'-Bis-(6-hydroxyhexyloxy)-biphenyl und 0.113 g p-Toluolsulfonsäure in 110 ml frisch über $P_4O_{10}$ destilliertem 1,2-Dichlorethan in einem mit Soxhlet-Extraktor, Rückflußkühler und Trockenrohr versehenen Rundkolben 12 h bei 95° C und dann 26 h bei 105° C Badtemperatur am Rückfluß gekocht. Entstandenes Reaktionswasser wird durch $P_4O_{10}$, welches sich in der Hülse des Soxhlet-Extraktors befindet, gebunden. Die klare Polymerlösung wird in Methanol gefällt. Das Polymere wird in 1,2-Dichlorethan gelöst und in Aceton gefällt. Das Polymere wird bei 80° C im Vakuum getrocknet. Die Ausbeute beträgt 4.5 g (84 % d.Th.).

| Elementaranalyse: | | |
|---|---|---|
| ber.: | 75,73 C | 8,13 H |
| gef.: | 75,70 C | 8,36 H |

Das Polymere hat eine Umwandlungstemperatur die bei 121° C den Übergang zwischen zwei verschiedenen smektischen Flüssigkristallphasen charakterisiert und eine Umwandlungstemperatur smektisch/isotrop von 141° C, die Umwandlungswärmen wurden zu 13.4 J/g (121° C) und 18,3 J/g (184° C) bestimmt.

Beispiel 3

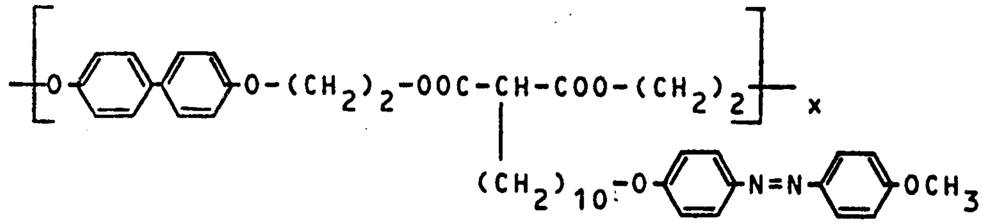

Das Polymere wurde entsprechend Beispiel 1 aus 4,4'-Bis-(2-hydroxyethyloxy)-biphenyl und 10-[4-(4'-Methoxyphenylazophenoxy)-2-decyl]-malonsäurediethylester hergestellt. Die Ausbeute beträgt 93 % d.Th.

| Elementaranalyse: | | | |
|---|---|---|---|
| ber.: | 71,17 C | 6,82 H | 3,95 N |
| gef.: | 70,90 C | 6,74 H | 3,84 N |

Das Polymere hat eine Glastemperatur von 120° C und einen Schmelzpunkt von 162° C mit einer Umwandlungsenthalpie von 25.0 J/g und einen in der unterkühlten Schmelze beobachtbaren Phasenübergang nematisch/isotrop bei 159° C.

**Patentansprüche**

1. Mesogene Gruppen enthaltende flussigkristalline Polymere, dadurch gekennzeichnet, daß sie aufgebaut sind aus mesogene Gruppen enthaltenden Polyestern, Polyamiden oder Polyesteramiden, an die Seitenketten gebunden sind, die jeweils eine mesogene Gruppe enthalten.

2. Polymere nach Anspruch 1, dadurch gekennzeichnet, daß die mesogenen Gruppen in der Polymerkette durch aliphatische oder araliphatische Gruppen, die Heteroatome in der Kette enthalten, oder aromatische Gruppen miteinander verbunden sind.

3. Polymere nach den Ansprüchen 1 und 2, dadurch gekennzeichnet, daß die Seitenketten, die jeweils eine mesogene Gruppe enthalten, an die aliphatische, araliphatische oder aromatische Gruppen der Polymerkette gebunden sind.

4. Polymere nach den Ansprüchen 1 und 2, dadurch gekennzeichnet, daß die Seitenketten, die jeweils eine mesogene Gruppe enthalten, an die mesogenen Gruppen der Polymerkette gebunden sind.

5. Polymere nach den Ansprüchen 1 bis 4, dadurch gekennzeichnet, daß die mesogenen Gruppen in den Seitenketten jeweils über eine aliphatische Gruppe mit Heteroatomen in der Kette mit bis zu 12 Kettengliedern an die Polymerkette gebunden sind.

6. Polymere nach den Ansprüchen 1 bis 5, dadurch gekennzeichnet, daß sie über Seitenketten vernetzt sind.

7. Verwendung von Polymeren nach den Ansprüchen 1 bis 6 zur Herstellung von Folien, Fasern und Formteilen mit erhöhter biaxialer Festigkeit.

**Claims**

1. A liquid-crystalline polymer containing mesogenic groups which is built up from polyesters, polyamides or polyester-amides which contain mesogenic groups and to which side chains which each contain one mesogenic group are bonded.

2. A polymer as claimed in claim 1, wherein the mesogenic groups in the polymer chain are bonded to one another via aliphatic or araliphatic groups containing heteroatoms in the chain, or via aromatic

groups.

3. A polymer as claimed in claim 1 or 2, wherein the side chains which each contain one mesogenic group are bonded to the aliphatic, araliphatic or aromatic groups of the polymer chain.

4. A polymer as claimed in claim 1 or 2, wherein the side chains which each contain one mesogenic group are bonded to the mesogenic groups of the polymer chain.

5. A polymer as claimed in claim 1 or 2 or 3 or 4, wherein the mesogenic groups in the side chains are each bonded to the polymer chain via an aliphatic group having heteroatoms in the chain having up to 12 chain members.

6. A polymer as claimed in claim 1 or 2 or 3 or 4 or 5, which is crosslinked via side chains.

7. The use of a polymer as claimed in claim 1 or 2 or 3 or 4 or 5 or 6 for the production of films, fibers and moldings having increased biaxial strength.

**Revendications**

1. Polymères cristallins liquides contenant des groupes mésogènes, caractérisés en ce qu'ils sont constitués par des polyesters, des polyamides ou des polyamides d'esters qui contiennent des groupes mésogènes et auxquels sont liées des chaînes latérales qui contiennent chacune un groupe mésogène.

2. Polymères selon la revendication 1, caractérisés en ce que les groupes mésogènes dans la chaîne de polymère sont reliés entre eux par des groupements aliphatiques ou araliphatiques qui contiennent des hétéroatomes dans la chaîne ou par des groupements aromatiques.

3. Polymères selon la revendication 1 ou 2, caractérisés en ce que les chaînes latérales, qui contiennent chacune un groupe mésogène, sont liées aux groupements aliphatiques, araliphatiques ou aromatiques de la chaîne de polymère.

4. Polymères selon la revendication 1 ou 2, caractérisés en ce que les chaînes latérales, qui contiennent chacune un groupe mésogène, sont liées aux groupes mésogènes de la chaîne de polymère.

5. Polymères selon l'une quelconque des revendications 1 à 4, caractérisés en ce que les groupes mésogènes dans les chaînes latérales sont liés chacun à la chaîne de polymère par l'intermédiaire d'un groupement aliphatique renfermant des hétéroatomes dans la chaîne qui comporte jusqu'à 12 maillons.

6. Polymères selon l'une quelconque des revendication 1 à 5, caractérisés en ce qu'ils sont reticulés au moyen de chaînes latérales.

7. Utilisation de polymères selon l'une quelconque des revendications 1 à 6 pour la fabrication de feuilles, de fibres et de pièces moulées à résistance biaxiale élevée.